# EUROPÄISCHE PATENTSCHRIFT

(11) **EP 1 846 650 B1**
(45) Veröffentlichungstag und Bekanntmachung des Hinweises auf die Patenterteilung: **15.10.2008**
(21) Anmeldenummer: 06706428.7
(22) Anmeldetag: 26.01.2006
(51) Int. Cl.: F02M 21/02, F02B 37/04

(54) **BRENNKRAFTMASCHINE MIT GASBETRIEB**
GAS-OPERATED INTERNAL COMBUSTION ENGINE
MOTEUR A COMBUSTION INTERNE FONCTIONNANT AU GAZ

(30) Priorität: 10.02.2005 DE 102005005958
(43) Veröffentlichungstag der Anmeldung: 24.10.2007
(73) Patentinhaber: Volkswagen Aktiengesellschaft, 38436 Wolfsburg (DE)
(72) Erfinder: ANDERSEN, Jens, 38162 Cremlingen (DE)
(74) Vertreter: Pohlmann, Bernd Michael
(86) Internationale Anmeldenummer: PCT/EP2006/000682
(87) Internationale Veröffentlichungsnummer: WO 2006/084583

(56) Entgegenhaltungen:
- EP-A- 1 363 001
- US-A- 5 315 973
- US-A- 5 329 908

## Beschreibung

Die Erfindung betrifft ein Verfahren zum Betrieb einer Brennkraftmaschine mit Gas, sowie eine gasbetriebene Brennkraftmaschine, insbesondere für einen mit Erdgas betriebenen Kraftfahrzeugantrieb, wobei die Brennkraftmaschine mit Aufladung betrieben wird.

Erdgas hat aufgrund seiner Eigenschaften als Alternativkraftstoff in letzter Zeit an Bedeutung gewonnen. Verbrennungsmotorisch interessant ist Erdgas vor allem wegen seiner hohen Oktanzahl und damit hohen Klopffestigkeit und relativ hohen Energiedichte. Ein weiterer Vorteil ist der im Vergleich zu Benzin niedrige Gehalt an Katalysatorgiften wie Phosphor und Schwefel und der im Vergleich zu Benzin oder Diesel geringe Kohlenstoffanteil. Erdgas hat somit gute Verbrennungseigenschaften bei geringem Schadstoffausstoß und verminderter CO₂-Emission.

Als Kraftstoff wird Erdgas in hoch verdichteter Form unter der Bezeichnung CNG (Compressed Natural Gas) verwendet. Das komprimierte Gas wird unter einem Druck von ca. 200 bar in den Tank gefüllt und dabei auf ein Zweihundertstel seines Volumens reduziert.

Erdgasbetriebene Kraftfahrzeuge werden derzeit in zwei verschiedenen Versionen angeboten, mit bivalenter oder monovalenter Brennkraftmaschine. Bivalente Brennkraftmaschinen können sowohl mit Erdgas als auch mit Benzin betrieben werden. Diese schöpfen jedoch die Potenziale von Erdgas nicht aus und verteuern den Erdgasantrieb, da zwei komplette Treibstoffversorgungssysteme erforderlich sind.

Monovalente Fahrzeuge werden nur mit Erdgas betrieben oder haben einen Nottank mit bis zu 15 Litern Benzin. Die Brennkraftmaschine ist in diesem Fall auf den Erdgasantrieb optimiert.

Erdgasbetriebene Brennkraftmaschinen wurden in der Vergangenheit vor allem unter dem Gesichtspunkt niedriger Schadstoffemission konzipiert. Um auch im dynamischen Betrieb eine optimale Schadstoffumwandlung im Katalysator zu gewährleisten, ist eine präzise stöchiometrische Zusammensetzung des Erdgas-Luft-Gemisches (λ=1) erforderlich. Die Gaszumischung erfolgt deshalb in einigen Anwendungsfällen mit elektronisch geregelter Gaszufuhr, beispielsweise mittels einer Lambda-Regelung mittels Sauerstoffsensor, und "Multipoint"-Einblasung vor das Einlassventil eines jeden Zylinders der Brennkraftmaschine.

Ein wesentliches Unterscheidungsmerkmal zu Benzin-Brennkraftmaschinen ist die gasförmige Einblasung des Kraftstoffs in das Saugrohr. Dabei wird ein merklicher Anteil der Ansaugluft durch das Erdgas verdrängt. Dadurch nimmt die Ladung und damit auch die Leistung der Brennkraftmaschine ab. Bekanntlich liegt die Leistung eines üblichen Hubkolbenmotors bei Betrieb mit Erdgas ca. 15 % unter derjenigen bei Betrieb mit Benzin und unter derjenigen von aufgeladenen Dieselmotoren.

Ein teilweiser Ausgleich der Minderleistung ist, wie in der DE 100 62 391 A1 offenbart, durch eine Aufladung der Brennkraftmaschine bei Betrieb mit Erdgas möglich.

Eine weitere Reduzierung der gegenüber heutigen aufgeladenen Dieselmotoren bestehenden Leistungs- und Verbrauchsnachteile von erdgasbetriebenen Brennkraftmaschinen ist durch den Einsatz von Magermotorkonzepten möglich. Die bei Magermotoren geringere Bauteilbelastung erlaubt eine deutliche Anhebung der Ladedrücke. Allerdings nimmt bei sehr mageren Gemischen die Brenngeschwindigkeit ab, sodass zur Kompensation eine intensivierte Ladungsbewegung erforderlich ist. Entsprechende Magermotoren weisen neben Brennverfahren mit erweiterter Magerlauffähigkeit eine Abgasturboaufladung mit Ladeluftkühlung auf. Das Verdichtungsverhältnis liegt, je nach Konzept, zwischen 1:11 und 1:13.

Neben den Entwicklungen auf dem Gebiet der Magermotorkonzepte, gibt es Lösungsansätze, durch Direkteinspritzung des Kraftstoffs in den Brennraum den Wirkungsgrad erdgasbetriebener Brennkraftmaschinen weiter zu erhöhen. Der gasförmige Kraftstoff wird hierbei gegen Ende des Verdichtungstaktes unter hohen Druck von 200 bar direkt in den im Kolben angeordneten Brennraum eines ungedrosselten, hochverdichtenden Motors eingeblasen. Dadurch bildet sich, ähnlich wie beim Dieselmotor, ein inhomogenes Gas-Luftgemisch. Eine derartige Brennkraftmaschine ist beispielsweise aus der US 5,329,908 A bekannt. Bei Absinken des Gasdrucks unter einen vorgegebenen Wert, muss jedoch der Einblasungsbeginn und die Einblasungsdauer umgestellt werden, um das Einströmen des Gases sicher zu stellen. Dabei wird ein homogenes Gemisch gebildet, welches ein erheblich reduziertes Verdichtungsverhältnis erfordert. Da die Brennkraftmaschine mit einem konstanten Verdichtungsverhältnis betrieben wird, richtet sich das zu wählende Verdichtungsverhältnis nach der Betriebsart mit der höchsten Klopfneigung, also bei homogener Gemischbildung. Dadurch ist der Betreib der Brennkraftmaschine unzuverlässig und nicht aussetzfrei, insbesondere unter instationären Betriebsbedingungen und der Wirkungsgrad der Brennkraftmaschine bei Volllast nicht optimal.

Aufgabe der Erfindung ist es, die CO₂-Emission sowie Schadstoffemission von Brennkraftmaschinen deutlich zu senken bei gleichzeitig niedrigen Gesamtbetriebs- und Herstellungskosten der Brennkraftmaschine sowie verbesserten Leistungseigenschaften der Brennkraftmaschine.

Die Lösung der Aufgabe gelingt mit einer Brennkraftmaschine gemäß Anspruch 1 und einem Verfahren zum Betrieb einer Brennkraftmaschine gemäß Anspruch 9.

Die erfindungsgemäße gasbetriebene Brennkraftmaschine, insbesondere mit Erdgas betriebene Brennkraftmaschine, ist als "Downsizing"-Otto-Motor, d.h. als aufladbarer Otto-Motor mit einem, gegenüber einem nichtaufladbaren Otto-Motor mit gleicher Leistung, reduzierten Hubvolumen und erhöhtem maximalen Motordrehmoment ausgebildet und umfasst ein Gas-Einblasungssystem zur Einblasung des Gases in einen Luftansaugpfad stromauf der Zylinder, einen Abgasturbolader mit einem Verdichter und einer Turbine sowie einen stromauf des Verdichters im Luftansaugpfad angeordneten Kompressor.

Bei dem erfindungsgemäßen Verfahren zum Betrieb einer Brennkraftmaschine mit Gas, insbesondere mit Erdgas, wird ein "Downsizing"-Otto-Motor mit einem Abgasturbolader sowie einem stromauf des Abgasturboladers in einem Luftansaugpfad angeordneten Kompressor aufgeladen, das Gas in den Luftansaugpfad der Brennkraftmaschine eingeblasen, wobei ein homogenes Gas-Luftgemisch mit 0,9 < λ < 1,1 eingestellt wird, das Gas-Luftgemisch in Zylindern der Brennkraftmaschine hoch verdichtet und gezündet.

Die Verbrennung erfolgt vorzugsweise durch Fremdzündung mittels Zündkerzen. Die Aufbereitung des Gas-Luftgemisches erfolgt mit homogener und vorzugsweise mit stöchiometrischer Gemischbildung, wobei die Leistungseinstellung der Brennkraftmaschine durch Veränderung der Zylinder-Füllmenge realisiert wird.

Um auch im dynamischen Betrieb eine optimale Schadstoffumwandlung in einem Katalysator der Brennkraftmaschine zu gewährleisten, wird vorzugsweise eine präzise stöchiometrische Zusammensetzung des Gas-Luftgemisch mit λ = 1 eingestellt.

Die erfindungsgemäße Verbindung von "downsizing" mit kombinierter Kompressor- und Abgasturboaufladung sowie Saugrohrgaseinblasung führt bei dem Betreib eines OttoMotors mit Gas, insbesondere mit Erdgas (CNG), zu Drehmoment- und Leistungswerten von vergleichbaren Dieselmotoren, wobei die CO₂-Emission um ca. 25% reduziert wird. Die Herstellungskosten eines mit Erdgas betriebenen Fahrzeuges mit einer erfindungsgemäßen Brennkraftmaschine sind dabei nicht höher, als die für vergleichbare Fahrzeuge mit Dieselmotor und Partikelfilter.

Beim "downsizing" werden bezüglich des Hubraums kleinere, dafür aufgeladene Brennkraftmaschinen verwendet, die die Leistungsdaten größerer, nicht aufgeladener Brennkraftmaschinen abbilden, wobei diese durch eine Lastpunktverschiebung in wirkungsgradseitig besseren Betriebsbereichen der Brennkraftmaschine betreiben werden. Der Vorteil liegt in der deutlichen Verminderung von Reibungsverlusten, Gewicht und Bauraum. Insgesamt wird ein Fahrzeug mit einem "Downsizing - Motor" sparsamer und abgasärmer. Vorzugsweise ist das Hubvolumen der Brennkraftmaschine um 30% bis 50%, insbesondere um 35% bis 45% verringert und beträgt insbesondere 1,0 Liter bis 1,8 Liter für eine mit CNG betriebene Brennkraftmaschine mit doppelter Aufladung.

Das bei 200 bar in einem Tank gespeicherte Gas, insbesondere CNG, wird in einer vorteilhaften Ausgestaltung der Erfindung in einem Gas-Einblasungssystem auf Umgebungsdruck entspannt und über Gasinjektoren unmittelbar vor Einlassventilen der Zylinder, vorzugsweise über je ein Ventil pro Zylinder eingeblasen. Die homogene Gemischaufbereitung erfolgt durch die Einblasung des Gases in ein Saugrohr, wobei vorzugsweise ein Gas-Luftgemisch mit λ= 1 durch Regelung über λ-Sonden eingestellt wird.

Das Gas-Luftgemisch wird in den Zylindern auf ein Verdichtungsverhältnis, welches zur Wirkungsgradoptimierung vorzugsweise höher als bei dem Basis-Ottomotor ist, von vorzugsweise 12 bis 14 , verdichtet. Das Verdichtungsverhältnis ist dabei definiert als der Quotient aus maximalem und minimalem Zylindervolumen. Das maximale Zylindervolumen liegt vor, wenn sich der Zylinderkolben im unteren Totpunkt befindet, das minimale Zylindervolumen liegt vor, wenn sich der Zylinderkolben im oberen Totpunkt befindet. Der Vorgang der Verdichtung ist einer von vier Arbeitstakten der Brennkraftmaschine und sorgt dafür, dass die Temperatur und der Druck des Gas-Luftgemisches erhöht werden. Ein hohes Verdichtungsverhältnis erlaubt dabei einen späten Zündzeitpunkt auf Grund der schnelleren Verbrennung. Vorzugsweise erfolgt die Zündung auf der Basis eines für den CNG-Betrieb optimierten Zündkennfelds.

Im Brennraum der Zylinder wird das verdichtete Gemisch vorzugsweise mittels einer Zündkerze entflammt. Die Bereitstellung der Zündenergie erfolgt dabei über eine Zündspule, gesteuert durch eine Steuereinheit der Brennkraftmaschine.

In einer vorteilhaften Ausgestaltung der erfindungsgemäßen gasbetriebenen Brennkraftmaschine ist zur Steuerung des Ladedrucks bzw. zur Überbrückung des Kompressors eine den Kompressor überbrückende Bypass-Leitung mit einer einstellbaren Verdichterdrosselklappe angeordnet. Um unerwünschte Rückströmungen über die Bypass-Klappe in solchen Situationen zu verhindern, in denen der Kompressor weniger Luft fördert als der Abgasturbolader aus dem Raum nach der Verdichterdrosselklappe absaugt, kann außerdem eine Rückschlagklappe in der Bypassleitung vorgesehen sein, die sich bei Unterdruck in der Bypass-Leitung automatisch öffnet.

Die Aufladung der Brennkraftmaschine erfolgt mit einem Abgasturbolader. Mit einem stromauf des Abgasturboladers im Luftansaugpfad angeordneten Kompressor ist die Brennkraftmaschine, vorzugsweise im unteren Drehzahlbereich, insbesondere beim Starten und bis zu einer Drehzahl von 1700 U/min oder, abhängig von der Motorcharakteristik, ab einer Motordrehzahl, ab der für einen kontinuierlichen Übergang auf Aufladung ausschließlich durch den Abgasturbolader ein ausreichender Ladedruck durch den Abgasturbolader zur Verfügung steht, doppelt aufladbar. Damit kann der Ladedruck erhöht werden sowie eine Verringerung des "Turbolochs" bei geringen Drehzahlen der Brennkraftmaschine erzielt werden.

Vorzugsweise weist der Kompressor einen Antrieb auf, welcher über eine Kupplung mit einer Kurbelwelle der Brennkraftmaschine verbunden bzw. verbindbar ist, so dass der Kompressor mechanisch von der Brennkraftmaschine angetrieben werden kann. Der Kompressor wird beispielsweise über einen Riemen von der Kurbelwelle angetrieben. Mittels der Kupplung, beispielsweise einer Magnetkupplung, ist der Antrieb wahlweise von der Kurbelwelle trennbar, so dass in einem unteren Drehzahlbereich (bis ca. 1700 U/min) eine zusätzliche Aufladung durch den Kompressor realisiert wird und bei höheren Drehzahlen, bei welchen der Abgasturbolader eine ausreichende Aufladung gewährleistet, der Kompressor abgeschaltet werden kann, so dass es zu keinen weiteren Verlusten durch den Kompressor kommen kann.

Damit wird eine gasbetriebene Brennkraftmaschine mit fülligem Drehmomentverlauf über einen breiten Drehzahlbereich bei gleichzeitig reduziertem Hubvolumen zur Verfügung gestellt.

Die erfindungsgemäße Brennkraftmaschine kann auch für einen quasi-monovalenten Betrieb ausgelegt werden, bei welchem im "Notbetrieb" oder zur Reichweitenerhöhung über ein zusätzliches Einspritzsystem ein Ottokraftstoff (Benzin) aus einem Nottank (< 15l Volumen) in das Saugrohr eingespritzt werden kann.

Die Erfindung wird im Weiteren an Hand eines Ausführungsbeispieles näher erläutert.

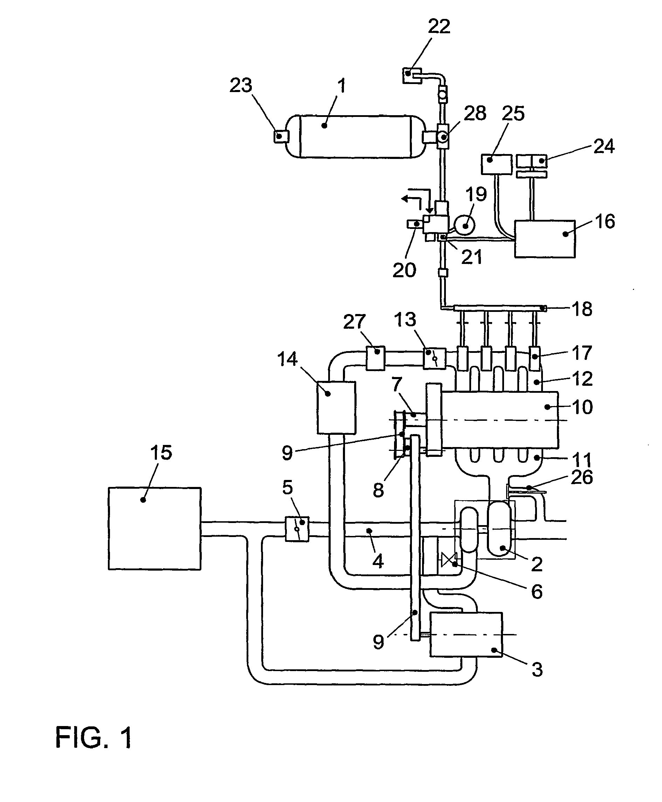

Die in Fig.1 dargestellte und mit Erdgas betriebene Brennkraftmaschine eines Mittelklassefahrzeugs ist als "Downsizing"-Otto-Motor mit einer Leistung von 100 kW bis 125 kW konzipiert und weist ein Volumen von 1,4 Liter auf.

Die Brennkraftmaschine umfasst ein Gas-Einblasungssystem mit welchem Erdgas aus einem Tank **1** über ein Gasrail **18** und Gasinjektoren **17** in das Saugrohr **12** des Luftansaugpfades der Brennkraftmaschine eingeblasen werden kann. Das Erdgas, welches mit einem Druck von ca. 200 bar im Tank **1** gespeichert ist, wird im Gas-Einblasungssystem mittels Druckmanometer **19** und Druckregler **20** auf einen Druck von 5 bar bis 9 bar entspannt, wobei ein möglichst niedriger Druck zur Reichweitenmaximierung anzustreben ist. Die Einblasung des Erdgases über die Gasinjektoren **17** kann früher als bei Ottokraftstoff erfolgen. Ebenso wird über das gesamte Kennfeld aufgrund der Zündeigenschaften und Klopffestigkeit von Erdgas (CNG) früher gezündet. Die Befüllung des Tanks **1** erfolgt über den Befüllanschluss **22** und das geöffnete Tankventil **28.**

Im Luftansaugpfad der Brennkraftmaschine ist ein Luftfilter **15,** ein Kompressor **3,** eine den Kompressor **3** überbrückende Bypass-Leitung **4** mit einer Verdichterdrosselklappe **5,** ein Verdichter des Abgasturboladers **2,** ein Ladeluftkühler **14,** ein EGR-Ventil **27,** eine Drosselklappe **13** und ein Saugrohr **12,** welches in die jeweiligen Zylinder in einem Zylinderkurbelgehäuse **10** mündet, angeordnet. Im Abgaspfad der Brennkraftmaschine ist ein Abgaskrümmer **11,** die Turbine des Abgasturboladers **2** und ein Wastegate **26** angeordnet.

Die Verdichterdrosselklappe **5** regelt dabei die Verdichtung des Kompressors **3** und versorgt den Verdichter des Abgasturboladers **2** mit genügend Luft, wenn die Förderleistung des Kompressors **3** nicht mehr ausreichend ist oder der Kompressor **3** bei ausreichend hohen Drehzahlen abgeworfen wird. Das Schubumluftventil **6** dient dem Schutz des Abgasturboladers **2** vor Überdehen im Schubbetrieb. Der Kompressor **3** wird über Riemen **9** von einer Kurbelwelle **7** der Brennkraftmaschine angetrieben. Dabei ist der Antrieb des Kompressors **3** mittels einer Kupplung **8,** beispielsweise einer Magnetkupplung, von der Kurbelwelle **7** trennbar. Im unteren Drehzahlbereich bis 1700 U/min erfolgt eine doppelte Aufladung durch den Kompressor **3.** Bei höheren Drehzahlen wird der Kompressor **3** abgekoppelt und die Brennkraftmaschine wird mit einer einfachen Aufladung durch den Abgasturbolader **2** betrieben. Damit wird ein fülliger Drehmomentverlauf der Brennkraftmaschine über einen breiten Drehzahlbereich realisiert.

Über einen Betriebsartenwahlschalter **24** und ein Motorsteuergerät **16** kann über ein zusätzliches Einspritzsystem (nicht dargestellt) Benzin aus einem Nottank in das Saugrohr **12** eingespritzt werden. Eine Umstellung auf Benzin kann beispielsweise dann notwendig werden, wenn über die Kontrollanzeige **25** angezeigt wird, dass der Tank **1** nicht mehr ausreichend befüllt ist.

Die beispielhaft beschriebene Brennkraftmaschine weist trotz reduziertem Hubvolumen gegenüber einem vergleichbaren Dieselmotor vergleichbare Leistungs- und Drehmomentwerte auf. Durch den Erdgasbetrieb wird die CO₂-Emission um ca. 25 % gesenkt. Die Herstellungskosten eines Fahrzeuges mit einer erfindungsgemäßen Brennkraftmaschine liegen dabei nicht höher als die für Dieselfahrzeuge mit Partikelfilter und vergleichbaren Leistungswerten. Der Verbrauch liegt bei ca. 7,3 kg/100km, wodurch die Betriebskosten aufgrund des geringeren Kraftstoffpreises reduziert werden können.

### BEZUGSZEICHENLISTE

- 1: Tank
- 2: Abgasturbolader
- 3: Kompressor
- 4: Bypass-Leitung
- 5: Verdichterdrosselklappe
- 6: Schubumluftventil
- 7: Kurbelwelle
- 8: Kupplung
- 9: Riemen
- 10: Zylinderkurbelgehäuse
- 11: Abgaskrümmer
- 12: Saugrohr
- 13: Drosselklappe
- 14: Ladeluftkühler
- 15: Luftfilter
- 16: Motorsteuergerät
- 17: Gasinjektor
- 18: Gasrail
- 19: Druckmanometer
- 20: Druckregler
- 21: Absperrventil
- 22: Befüllanschluss
- 23: Thermosicherung
- 24: Betriebsartenwahlschalter
- 25: Kontrollanzeige
- 26: Wastegate
- 27: EGR-Ventil
- 28: Tankventil

## Patentansprüche

1. Gasbetriebene Brennkraftmaschine, insbesondere erdgasbetriebene Brennkraftmaschine, welche als aufladbarer Otto-Motor mit einem, gegenüber einem nichtaufladbaren Otto-Motor mit gleicher Leistung, reduzierten Hubvolumen und erhöhten maximalen Motordrehmoment ausgebildet ist und ein Gas-Einblasungssystem zur Einblasung des Gases in einen Luftansaugpfad stromauf von Zylindern der Brennkraftmaschine, einen Abgasturbolader (2) mit einem Verdichter und einer Turbine sowie einen stromauf des Verdichters im Luftansaugpfad angeordneten Kompressor (3) umfasst.

2. Gasbetriebene Brennkraftmaschine nach Anspruch 1, **dadurch gekennzeichnet, dass** das Hubvolumen um 30% bis 50%, insbesondere um 35% bis 45% gegenüber einem nichtaufladbaren Otto-Motor mit gleicher Leistung reduziert ist.

3. Gasbetriebene Brennkraftmaschine nach einem der vorhergehenden Ansprüche, **dadurch gekennzeichnet, dass** das Hubvolumen 1,0 Liter bis 1,8 Liter beträgt.

4. Gasbetriebene Brennkraftmaschine nach einem der vorhergehenden Ansprüche, **dadurch gekennzeichnet, dass** das maximale Motordrehmoment um mind. 25% gegenüber einem nichtaufladbaren Otto-Motor mit gleicher Leistung erhöht ist.

5. Gasbetriebene Brennkraftmaschine nach einem der vorhergehenden Ansprüche, **dadurch gekennzeichnet, dass** das Gas-Einblasungssystem Gasinjektoren (17) aufweist, über welche das Gas unmittelbar vor Einlassventilen der Zylinder mit einem einstellbaren Druck einblasbar ist.

6. Gasbetriebene Brennkraftmaschine nach einem der vorhergehenden Ansprüche, **dadurch gekennzeichnet, dass** die Brennkraftmaschine über den gesamten nutzbaren Drehzahlbereich ab Leerlaufdrehzahl aufladbar ist.

7. Gasbetriebene Brennkraftmaschine nach einem der vorhergehenden Ansprüche, **dadurch gekennzeichnet, dass** eine den Kompressor (3) überbrückende und wahlweise verschließbare Bypass-Leitung (4) im Luftansaugpfad vorgesehen ist.

8. Gasbetriebene Brennkraftmaschine nach Anspruch 7, **dadurch gekennzeichnet, dass** in der Bypass-Leitung (4) eine Regelklappe, insbesondere eine Verdichtungsdrosselklappe (5) angeordnet ist.

9. Gasbetriebene Brennkraftmaschine nach einem der vorhergehenden Ansprüche, **dadurch gekennzeichnet, dass** der Kompressor (3) einen Antrieb (9) aufweist, welcher über eine Kupplung (8) mit einer Kurbelwelle (7) der Brennkraftmaschine verbunden oder verbindbar ist.

10. Verfahren zum Betrieb einer Brennkraftmaschine mit Gas, insbesondere mit Erdgas, bei welchem die als aufladbarer Otto-Motor ausgebildete Brennkraftmaschine mit einem, gegenüber einem nichtaufladbaren Otto-Motor mit gleicher Leistung, reduzierten Hubvolumen und erhöhten maximalem Motordrehmoment
- mit einem Abgasturbolader (2) sowie einem stromauf des Abgasturboladers (2) in einem Luftansaugpfad angeordneten Kompressor (3) aufgeladen wird,
- das Gas in einen Luftansaugpfad der Brennkraftmaschine eingeblasen wird, wobei ein homogenes Gas-Luftgemisch mit 0,9 < λ < 1,1 eingestellt wird,
- das Gas-Luftgemisch in Zylindern der Brennkraftmaschine hoch verdichtet und
- gezündet wird.

11. Verfahren nach Anspruch 10, **dadurch gekennzeichnet, dass** der Kompressor (3) über eine Kupplung (8) von einer Kurbelwelle (7) der Brennkraftmaschine angetrieben wird.

12. Verfahren nach einem der vorhergehenden Ansprüche 10 oder 11, **dadurch gekennzeichnet, dass** der Ladedruck mit einer den Kompressor (3) überbrückenden Bypassleitung (4) mit einer Regelklappe (5) eingestellt wird.

13. Verfahren nach einem der vorhergehenden Ansprüche 10 bis 12, **dadurch gekennzeichnet, dass** der Kompressor (3) im mittleren Drehzahlbereich, insbesondere ab einer Drehzahl von 1700 U/min abgeschaltet wird.

14. Verfahren nach einem der vorhergehenden Ansprüche 10 bis 13, **dadurch gekennzeichnet, dass** das Gas unmittelbar vor Einlassventilen der Zylinder eingeblasen wird.

15. Verfahren nach einem der vorhergehenden Ansprüche 10 bis 14, **dadurch gekennzeichnet, dass** das Gas in einem Gas-Einblassystem von einem Druck von 200 bar auf Umgebungsdruck entspannt wird.

16. Verfahren nach einem der vorhergehenden Ansprüche 10 bis 15, **dadurch gekennzeichnet, dass** ein stöchiometrisches Gas-Luftgemisch mit λ = 1 eingestellt wird.

17. Verfahren nach einem der vorhergehenden Ansprüche 10 bis 16, **dadurch gekennzeichnet, dass** das Gas-Luftgemisch auf ein wirkungsgradoptimales Verdichtungsverhältnis von 12 bis 14 verdichtet wird.

18. Verfahren nach einem der vorhergehenden Ansprüche 10 bis 17, **dadurch gekennzeichnet, dass** das verdichtete Gas-Luftgemisch auf Basis eines für den Gas-Betrieb wirkungsgradoptimierten Kennfelds gezündet wird.

## Claims

1. Gas-operated internal combustion engine, in particular natural-gas-operated internal combustion engine, which internal combustion engine is designed as a superchargeable spark-ignition engine with a reduced swept volume and increased maximum engine torque in relation to a non-superchargeable spark-ignition engine with the same power, and which internal combustion engine comprises a gas injection system for injecting the gas into an air intake path upstream of cylinders of the internal combustion engine, an exhaust-gas turbocharger (2) with a compressor and a turbine, and a supercharger (3) which is arranged upstream of the compressor in the air intake path.

2. Gas-operated internal combustion engine according to Claim 1, **characterized in that** the swept volume is reduced by 30% to 50%, in particular by 35% to 45%, in relation to a non-superchargeable spark-ignition engine with the same power.

3. Gas-operated internal combustion engine according to one of the preceding claims, **characterized in that** the swept volume is 1.0 litre to 1.8 litres.

4. Gas-operated internal combustion engine according to one of the preceding claims, **characterized in that** the maximum engine torque is increased by at least 25% in relation to a non-superchargeable spark-ignition engine with the same power.

5. Gas-operated internal combustion engine according to one of the preceding claims, **characterized in that** the gas injection system has gas injectors (17), by means of which the gas can be injected with an adjustable pressure directly upstream of inlet valves of the cylinders.

6. Gas-operated internal combustion engine according to one of the preceding claims, **characterized in that** the internal combustion engine can be supercharged over the entire useable rotational speed range from the idle rotational speed.

7. Gas-operated internal combustion engine according to one of the preceding claims, **characterized in that** a bypass line (4) which bypasses the supercharger (3) and which can be selectively closed off is provided in the air intake path.

8. Gas-operated internal combustion engine according to Claim 7, **characterized in that** a regulating flap, in particular a compression throttle flap (5), is arranged in the bypass line (4).

9. Gas-operated internal combustion engine according to one of the preceding claims, **characterized in that** the supercharger (3) has a drive (9) which is or can be connected by means of a clutch (8) to a crankshaft (7) of the internal combustion engine.

10. Method for operating an internal combustion engine with gas, in particular with natural gas, in which method the internal combustion engine, which is designed as a superchargeable spark-ignition engine and which has a reduced swept volume and increased maximum engine torque in relation to a non-superchargeable spark-ignition engine with the same power,
- is supercharged by means of an exhaust-gas turbocharger (2) and a supercharger (3) which is arranged upstream of the exhaust-gas turbocharger (2) in an air intake path,
- the gas is injected into an air intake path of the internal combustion engine, with a homogeneous gas-air mixture with 0.9 < λ < 1.1 being set,
- the gas-air mixture is highly compressed in cylinders of the internal combustion engine, and
- is ignited.

11. Method according to Claim 10, **characterized in that** the supercharger (3) is driven via a clutch (8) by a crankshaft (7) of the internal combustion engine.

12. Method according to one of the preceding Claims 10 or 11, **characterized in that** the charge pressure is adjusted by means of a bypass line (4) which bypasses the supercharger (3) and which has a regulating flap (5).

13. Method according to one of the preceding Claims 10 to 12, **characterized in that** the supercharger (3) is deactivated in the mid-rotational speed range, in particular above a rotational speed of 1700 rev/min.

14. Method according to one of the preceding Claims 10 to 13, **characterized in that** the gas is injected directly upstream of inlet valves of the cylinders.

15. Method according to one of the preceding Claims 10 to 14, **characterized in that** the gas is expanded in a gas injection system from a pressure of 200 bar to ambient pressure.

16. Method according to one of the preceding Claims 10 to 15, **characterized in that** a stoichiometric gas-air mixture with λ = 1 is set.

17. Method according to one of the preceding Claims 10 to 16, **characterized in that** the gas-air mixture is compressed to a compression ratio, which is optimum in terms of efficiency, of 12 to 14.

18. Method according to one of the preceding Claims 10 to 17, **characterized in that** the compressed gas-air mixture is ignited on the basis of a characteristic map which is optimized in terms of efficiency for gas operation.

## Revendications

1. Moteur à combustion interne fonctionnant au gaz, en particulier moteur à combustion interne fonctionnant au gaz naturel, qui est réalisé sous forme de moteur à allumage par étincelle pouvant être suralimenté, comprenant une cylindrée réduite par rapport à un moteur à allumage par étincelle de même puissance mais sans suralimentation, et un couple moteur maximal accru, et qui comprend un système de soufflage de gaz pour souffler du gaz dans une voie d'admission d'air en amont des cylindres du moteur à combustion interne, une turbosoufflante à gaz d'échappement (2) avec un suralimenteur et une turbine ainsi qu'un compresseur (3) disposé en amont du suralimenteur dans la voie d'admission d'air.

2. Moteur à combustion interne fonctionnant au gaz selon la revendication 1, **caractérisé en ce que** la cylindrée est réduite de 30% à 50%, notamment de 35% à 45% par rapport à un moteur à allumage par étincelle de même puissance mais sans suralimentation.

3. Moteur à combustion interne fonctionnant au gaz selon l'une quelconque des revendications précédentes, **caractérisé en ce que** la cylindrée est de 1,0 litre à 1,8 litre.

4. Moteur à combustion interne fonctionnant au gaz selon l'une quelconque des revendications précédentes, **caractérisé en ce que** le couple moteur maximal est accru d'au moins 25% par rapport à un moteur à allumage par étincelle de même puissance mais sans suralimentation.

5. Moteur à combustion interne fonctionnant au gaz selon l'une quelconque des revendications précédentes, **caractérisé en ce que** le système de soufflage de gaz présente des injecteurs de gaz (17) par le biais desquels le gaz peut être soufflé directement avant les soupapes d'admission des cylindres avec une pression ajustable.

6. Moteur à combustion interne fonctionnant au gaz selon l'une quelconque des revendications précédentes, **caractérisé en ce que** le moteur à combustion interne peut être suralimenté à partir du régime de ralenti sur toute la plage de régimes utile.

7. Moteur à combustion interne fonctionnant au gaz selon l'une quelconque des revendications précédentes, **caractérisé en ce qu'**une conduite de dérivation (4) surmontant le compresseur (3) et éventuellement obturable est prévue dans la voie d'admission d'air.

8. Moteur à combustion interne fonctionnant au gaz selon la revendication 7, **caractérisé en ce que** l'on dispose dans la conduite de dérivation (4), un clapet de régulation, en particulier un clapet d'étranglement de compression (5).

9. Moteur à combustion interne fonctionnant au gaz selon l'une quelconque des revendications précédentes, **caractérisé en ce que** le compresseur (3) présente un entraînement (9) qui est connecté ou qui peut être connecté par le biais d'un embrayage (8) à un vilebrequin (7) du moteur à combustion interne.

10. Procédé pour faire fonctionner un moteur à combustion interne avec du gaz, notamment avec du gaz naturel, dans lequel le moteur à combustion interne réalisé sous forme de moteur à allumage par étincelle pouvant être suralimenté, avec une cylindrée réduite et un couple moteur maximal accru par rapport à un moteur à allumage par étincelle de même puissance mais sans suralimentation,
- est suralimenté avec une turbosoufflante à gaz d'échappement (2) ainsi qu'un compresseur (3) disposé en amont de la turbosoufflante à gaz d'échappement (2) dans une voie d'admission d'air,
- le gaz est soufflé dans une voie d'admission d'air du moteur à combustion interne, en établissant un mélange gaz-air homogène avec 0,9 < λ < 1,1,
- le mélange gaz-air est fortement comprimé dans les cylindres du moteur à combustion interne, et
- est allumé.

11. Procédé selon la revendication 10, **caractérisé en ce que** le compresseur (3) est entraîné par le biais d'un embrayage (8) par un vilebrequin (7) du moteur à combustion interne.

12. Procédé selon l'une quelconque des revendications précédentes 10 ou 11, **caractérisé en ce que** l'air de suralimentation est ajusté avec une conduite de dérivation (4) surmontant le compresseur (3) et comprenant un clapet de régulation (5).

13. Procédé selon l'une quelconque des revendications précédentes 10 à 12, **caractérisé en ce que** le compresseur (3) est coupé dans la plage de régime moyenne, notamment à partir d'un régime de 1700 t/min.

14. Procédé selon l'une quelconque des revendications précédentes 10 à 13, **caractérisé en ce que** le gaz est soufflé directement avant les soupapes d'admission des cylindres.

15. Procédé selon l'une quelconque des revendications précédentes 10 à 14, **caractérisé en ce que** le gaz est détendu à la pression atmosphérique dans un système de soufflage de gaz depuis une pression de 200 bars.

16. Procédé selon l'une quelconque des revendications précédentes 10 à 15, **caractérisé en ce que** l'on ajuste un mélange gaz-air stoechiométrique avec λ = 1.

17. Procédé selon l'une quelconque des revendications précédentes 10 à 16, **caractérisé en ce que** le mélange gaz-air est comprimé à un rapport de compression optimal pour le rendement, de 12 à 14.

18. Procédé selon l'une quelconque des revendications précédentes 10 à 17, **caractérisé en ce que** le mélange gaz-air comprimé est allumé sur la base d'un champ caractéristique optimisé en rendement pour le fonctionnement au gaz.
